# EUROPEAN PATENT SPECIFICATION

(11) **EP 3 859 261 B1**
(45) Date of publication and mention of the grant of the patent: **09.11.2022**
(21) Application number: 21150485.7
(22) Date of filing: 07.01.2021
(51) Int. Cl.: F28D 15/02, F28D 21/00, F28F 3/06, F28F 3/14

(54) **HEAT EXCHANGER FIN AND MANUFACTURING METHOD OF THE SAME**
WÄRMETAUSCHERRIPPE UND HERSTELLUNGSVERFAHREN DAFÜR
AILETTE D'ÉCHANGEUR DE CHALEUR ET SON PROCÉDÉ DE FABRICATION

(30) Priority: 29.01.2020 US 202062967064 P
(43) Date of publication of application: 04.08.2021
(73) Proprietor: Cooler Master Co., Ltd., Taipei City 114065 (TW)
(72) Inventor: Lin, Chia-yu, 23586 Chinese Taipei (TW); Cheng, Shan-yin, 23586 New Taipei City (TW)
(74) Representative: Grünecker Patent- und Rechtsanwälte PartG mbB

(56) References cited:
- EP-A1- 3 550 947
- EP-A2- 0 485 205
- CN-A- 109 341 401
- US-A1- 2008 298 020
- US-A1- 2018 308 780

## Description

### TECHNICAL FIELD

The present invention refers to heat exchanger fins according to the preamble of claim 1. It also refers to manufacturing methods of such heat exchanger fins. Such a heat exchanger fin is known from CN 109 341 401 A.

### BACKGROUND

During operation of electric and electronic elements, devices and systems, the heat generated thereby must be dissipated quickly and efficiently to keep operating temperature within manufacturer recommended ranges, under, at times, challenging operating conditions. As these elements, devices and systems increase in functionality and applicability, so does the power requirements thereof, this in turn increases cooling requirements.

Several techniques have been developed for extracting heat from electric and electronic elements, devices and systems. One such technique is an air-cooling system, wherein a heat exchanger is in thermal contact with the elements, devices or systems, transporting heat away therefrom, and then air flowing over the heat exchanger removes heat from the heat exchanger. One type of heat exchanger consists of a plurality of fins extending from a base plate. In general, the plurality of fins increases the rate of convective heat transfer to or from an environment of the heat exchanger, by increasing the surface area of a heat source in thermal contact with the heat exchanger. Heat is transferred from the heat source to the base plate, the base plate to the plurality of fins and the environment, and the plurality of fins to the environment.

The thermal performance of the plurality of fins of the heat exchangers is dependent on the effectiveness to transfer heat. Thus, shape, thickness, material, and enhancements of the plurality of fins all contribute to the thermal performance thereof. An increase in the amount of the plurality of fins for a given attachment area increases surface area, but, may hinder the average amount of heat transferred from each square centimeter of the surface area by restricting airflow. Also, an increase in the height of the fins for a given attachment area also increases surface area, but, may decrease fin efficiency and increase mass, weight and costs. Increasing the amount and size of the plurality of fins may increase surface area, but contrarily, decrease overall thermal performance. This is further exacerbated when only natural convection is available.

CN 109 341 401 A relates to a cooling fin and a radiator having a plurality of such cooling fins. The cooling fin is preferably composed from two substrates to form a plate structure and a sealed hollow cavity is disposed between the two substrates. The hollow cavity is filled with a phase change working medium and is under a negative pressure state. The fin includes a uniform channel that appears to be a braided channel structure of uniform configuration.

US 2018/308780 A1 refers to a thermally superconducting radiator comprising a plurality of separators and a plurality of thermally superconducting heat dissipation fins. The separators and the thermally superconducting heat dissipation fins are alternately arranged, and one end face of the separator is flush with one end face of the thermally superconducting heat dissipation fin, so that they together form a mounting surface suitable for mounting a power device. The thermally superconducting heat dissipation fin comprises two plates which are compounded together by a rolling process. The closed pipes that are interconnected and have a certain structure and shape are formed between the two plates by an inflation process. The closed pipes are filled with a heat transfer working medium. The closed pipe may have a hexagonal or honeycomb shape, a crisscrossed mesh shape, multiple U-shapes connected from head to end in series, a rhombic structure, a triangular structure, a circular structure, or any combinations of any or more of the above. Separators are provided on one side with grooves and intermediate separators are provided on both sides with grooves. The grooves are shaped to match the shape of convex structure of pipes located between the separators.

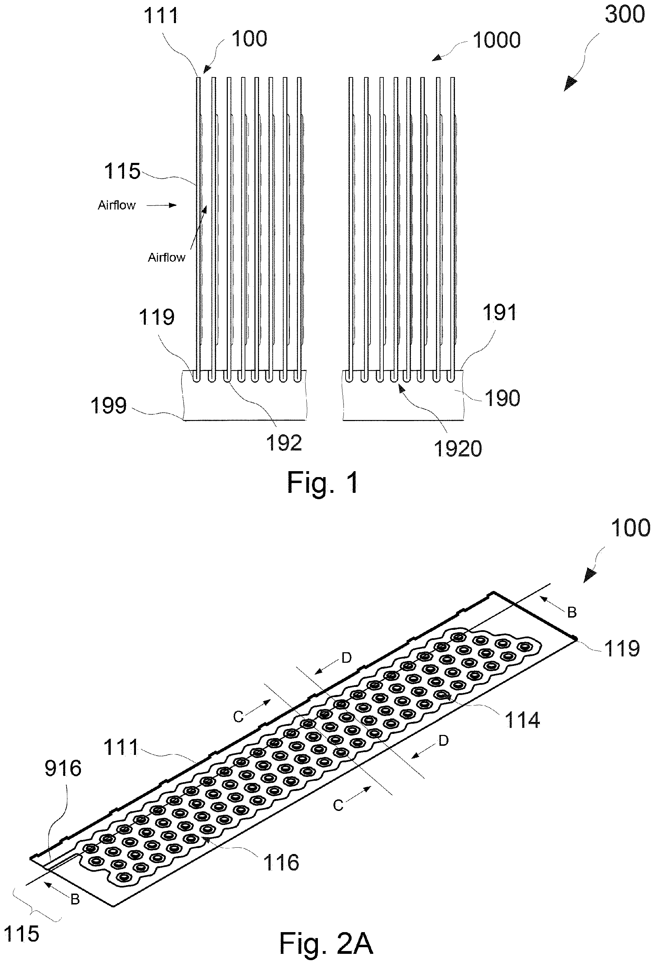

EP 3 550 947 A1 discloses a heat sink, including a base and a plurality of fins. Each of the fins includes a root and a tip that are disposed opposite each other. Each of the fins further includes a top and a bottom that are disposed opposite to each other and connected between the root and the tip. The heated area, a dropping pipe and a spacing strip that separates the heated area from the dropping pipe are formed in the fin. The heated area is located between the root and spacing strip. The dropping pipe is located between the spacing strip and the tip. The first passage and the second passage are formed between the heated area and the dropping pipe. The first passage is located between the spacing strip and the top, and the second passage is located between the spacing strip and bottom. At least the first passage and the second passage are honeycombed. In one embodiment (Fig. 1), the pipelines in the heated area are also honeycombed. The working medium inside the fin is circulated from the heated area to the first passage, one or more dropping pipes and the second passage and then back to the heated area. The pipelines in the heated area and the pipeline of the dropping pipe are formed by using an extrusion molding technology or are formed by using a blow molding technology pipelines.

US 2008/298020 A1 refers to a heat dissipation device to be mounted on a printed circuit board. Typically, the heat dissipation device is made by molding and extrusion method. The heat dissipation device 20 includes a base and a plurality of heat dissipation fins extending perpendicular from the base. Each heat dissipation fin includes a plurality of vent holes, arranged in a regular array (Fig. 1). The vent holes might be arranged in a matrix consisting of offset rows of venting holes. The vent holes are columnar, and each vent holes spans an entire width of the heat dissipation fin.

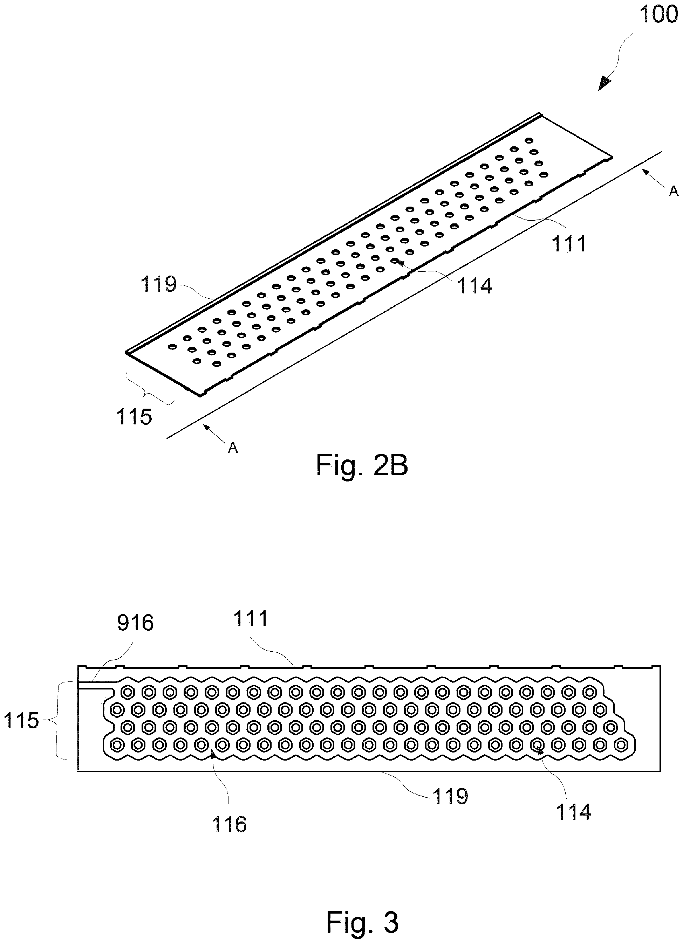

EP 0 485 205 A2 describes a heat sink that comprises a multilayered body realized by laying a plurality of heat sink fin elements one upon the other to a multilayered structure with spacers inserted between any two adjacent elements. Each of the heat sink fin elements is made of a rectangular thin plate having a number of slits arranged in said thin plate in parallel with its shorter edges and pin-fin sections formed by the remaining area of the thin plate (Fig. 3). The heat sink fin elements are prepared by means of a punching or edging technique so that heat sink fin elements of any pattern and dimensions may be obtained. The top or bottom surface area of the heat sink may be regarded as a single plate member.

### SUMMARY

The present invention is defined by the features of claim 1. 7 and 8.

### BRIEF DESCRIPTION OF THE DRAWINGS

Unless specified otherwise, the accompanying drawings illustrate aspects of the innovative subject matter described herein. Referring to the drawings, wherein like reference numerals indicate similar parts throughout the several views, several examples of heat exchanger systems and methods incorporating aspects of the presently disclosed principles are illustrated by way of example, and not by way of limitation.
Fig. 1 is a schematic perspective view of a heat exchanger, according to an example embodiment.
Fig. 2A is schematic perspective first view of a heat exchanger fin of the heat exchanger of Fig. 1, according to an example embodiment.
Fig. 2B is schematic perspective second view of the heat exchanger fin of Fig. 2A, according to an example embodiment.
Fig. 3 a schematic cross-sectional view of the heat exchanger fin of Fig. 2B along line A-A of Fig. 2B, according to an example embodiment.
Fig. 4 is a cross-sectional view of the heat exchanger fin of Fig. 2A along line B-B and between lines C-C and D-D of Fig. 2A, according to an example embodiment.
Fig. 5 is a flow chart illustrating a manufacturing method of the heat exchanger fin of Fig. 2A, according to an example embodiment.

### DETAILED DESCRIPTION

The following describes various principles related to heat exchanger systems and methods by way of reference to specific examples of heat exchanger systems and methods, including specific arrangements and examples of metal sheets, braided channels and airflow through holes embodying innovative concepts. More particularly, but not exclusively, such innovative principles are described in relation to selected examples of heat exchanger systems and methods and well-known functions or constructions are not described in detail for purposes of succinctness and clarity. Nonetheless, one or more of the disclosed principles can be incorporated in various other embodiments of heat exchanger systems and methods to achieve any of a variety of desired outcomes, characteristics, and/or performance criteria.

Thus, heat exchanger systems and methods having attributes that are different from those specific examples discussed herein can embody one or more of the innovative principles, and can be used in applications not described herein in detail. Accordingly, embodiments of heat exchanger systems and methods not described herein in detail also fall within the scope of this disclosure, as will be appreciated by those of ordinary skill in the relevant art following a review of this disclosure.

Example embodiments as disclosed herein are directed to heat exchangers and heat exchanger fins, under vacuum, and having a working fluid therein, and manufacturing methods of the heat exchanger fins. In an embodiment, a heat exchanger comprising a plurality of heat exchanger fins and a base plate is provided. Each heat exchanger fin comprises a fin body having a plurality of airflow through holes therethrough, forming braided channels therearound. The braided channels are formed by at least a first and second metal sheet of each heat exchange fin. The braided channels are under vacuum and have a working fluid therein. The plurality of airflow through holes force airflow to flow from a second direction perpendicular to the airflow flowing across the surfaces between each neighboring heat exchanger fin from a first direction, creating turbulent airflow, eliminating dead air between each heat exchanger fin. The braided channels are formed by a staggered pitch of the plurality of airflow through holes, increasing the creation of non-equilibrium pressure conditions, strengthening the self-sustaining turbulent driving forces within the braided channels for heat dissipation.

Fig. 1 is a schematic perspective view of a heat exchanger 300, according to an example embodiment. The heat exchanger 300 may be employed to cool at least one of an electric and/or electronic element, device and/or system. Referring to Fig. 1, the heat exchanger 300 comprises a plurality of heat exchanger fins 1000 and a base plate 190. Each heat exchanger fin 100 of the plurality of heat exchanger fins 1000 comprises a fin base 119, a fin body 115, and a fin tip 111, opposite the fin base 119. The base plate 190 comprises a mounting surface 191 and a contact surface 199, opposite the mounting surface 191. The mounting surface 191 has a plurality of mounting grooves 1920 thereon, substantially parallel thereamong and evenly spaced apart.

The dimensions, depth, and amount of each mounting groove 192 of the plurality of mounting grooves 1920 correspond to the dimensions, height and amount of each fin base 119 of each heat exchanger fin 100. Each fin base 119 of each heat exchanger fin 100 may be thermally and mechanically, permanently attached to each mounting groove 192 by brazing techniques known to those of ordinary skill in the relevant art; however, the embodiments are not limited thereto. Other appropriate methods may be employed, as long as heat may be efficiently and effectively transferred from the base plate 190 to the plurality of heat exchanger fins 1000. In some embodiments, each fin base 119 may be hemmed, reinforcing the strength thereof and increasing the surface area for conductive heat transfer from the base plate 190 to the plurality of heat exchanger fins 1000.

The area occupied by the plurality of heat exchanger fins 1000 on the mounting surface 191 may be varied depending upon application and design requirements. As an example, the area may be smaller, resulting in a non-occupied area of the mounting surface 191 on one or more than one side thereof, or the area may be larger, extending outward over one or more side edges of the mounting surface 191, and the embodiments are not limited thereto.

One or more heat sources (not shown) of electric and/or electronic elements, devices and/or systems, or any combination thereof, may be attached to the contact surface 199, for example and not to be limiting, by fastening or other means known to those of ordinary skill in the relevant art. As long as heat may be efficiently and effectively transferred from the one or more heat sources (not shown) to the base plate 190.

Fig. 2A is schematic perspective first view of a heat exchanger fin 100 of the heat exchanger 300 of Fig. 1, according to an example embodiment. Fig. 2B is schematic perspective second view of each heat exchanger fin 100 of Fig. 2A, according to an example embodiment. Referring to Figs. 2A to 2B, and referring to Fig. 1, the fin body 115 of each heat exchanger fin 100 comprises a plurality of airflow through holes 114 therethrough, forming braided channels 116 therearound. The plurality of airflow through holes 114 is generally circular-shaped having a staggered pitch; however, the embodiments are not limited thereto. Those of ordinary skill in the relevant art may readily appreciate that the shape and pitches of the plurality of airflow through holes 114 may be varied, such as hexagonal-shaped with larger and/or smaller and staggered pitches or any combination thereof, depending upon application and design requirements and the embodiments are not limited thereto.

Dead air insulates heat exchanger fin surfaces which are facing one another and the base plate surfaces therebetween, keeping heat therein, thus, preventing heat dissipation and decreasing thermal performance of heat exchangers. This is further exacerbated when only natural convection is available and the distance between the heat exchanger fins is minimized. The plurality of airflow through holes 114 of the embodiments, force airflow to flow from a second direction perpendicular to the airflow flowing across the surfaces between each neighboring heat exchanger fin 100 along the length of each fin base 119 attached to each mounting groove 192 from a first direction, agitating airflow, creating turbulent airflow, thus, eliminating dead air between each heat exchanger fin 100. By eliminating dead air via the plurality of airflow through holes 114, the distance between the plurality of heat exchanger fins 1000 may be minimized without sacrificing heat dissipation and thermal performance or the average amount of heat transferred from each square centimeter of surface area of the plurality of heat exchanger fins 1000, even when only natural convection is available.

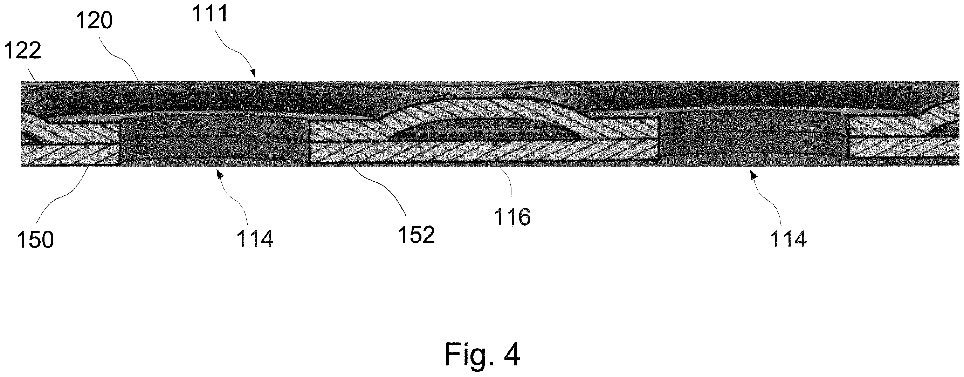

Fig. 3 a schematic cross-sectional view of the heat exchanger fin of Fig. 2B along line A-A of Fig. 2B, according to an example embodiment. Fig. 4 is a cross-sectional view of the heat exchanger fin of Fig. 2A along line B-B and between lines C-C and D-D of Fig. 2A, according to an example embodiment. Referring to Figs. 3 and 4, and referring to Figs. 1 to 2B, each of the heat exchange fins 100 further comprise at least a first metal sheet 150 and at least a second metal sheet 120, forming the fin base 119, fin body 115, fin tip 111, plurality of airflow through holes 114 and braided channels 116. The at least a first metal sheet 150 comprises a first inner surface 152 and the at least a second metal sheet 120 comprises a second inner surface 122. The second inner surface 122 comprises the plurality of airflow through holes 114 and braided channels 116.

In some embodiments, the plurality of heat exchanger fins 1000, is under vacuum, and has a working fluid therein. The working fluid is distributed naturally in the form of liquid vapor slugs/bubbles inside of the braided channels 116. In general, each heat exchanger fin 100 comprises an evaporator region, a condenser region, and vapor flow braided channel regions extending from the evaporator region to the condenser region. When heat from at least one heat source is applied to at least a part of the evaporator region, the heat converts the working fluid to vapor and the vapor bubbles become larger within the portion of each heat exchanger fin 100. Meanwhile, at the condenser region, heat is being removed and the bubbles are reducing in size. The volume expansion due to vaporization and the contraction due to condensation cause a turbulence motion via the braided channels 116. The net effect of the temperature gradient between the evaporator and the condenser and the tensions introduced via the braided channels 116 creates a non-equilibrium pressure condition. Thus, thermo-fluidic transport is provided via self-sustaining turbulent driving forces, having pressure pulsations being fully thermally driven.

The plurality of heat exchanger fins 1000, under vacuum, having a working fluid in the braided channels 116, increases heat dissipation and thermal performance thereof when compared to solid heat exchanger fins. The braided channels 116 formed by the staggered pitch plurality of airflow through holes 114 increases the creation of non-equilibrium pressure conditions, strengthening the self-sustaining turbulent driving forces within the braided channels 116. Furthermore, insulating blanket layers around heat source walls are prevented from forming and restricting heat transfer.

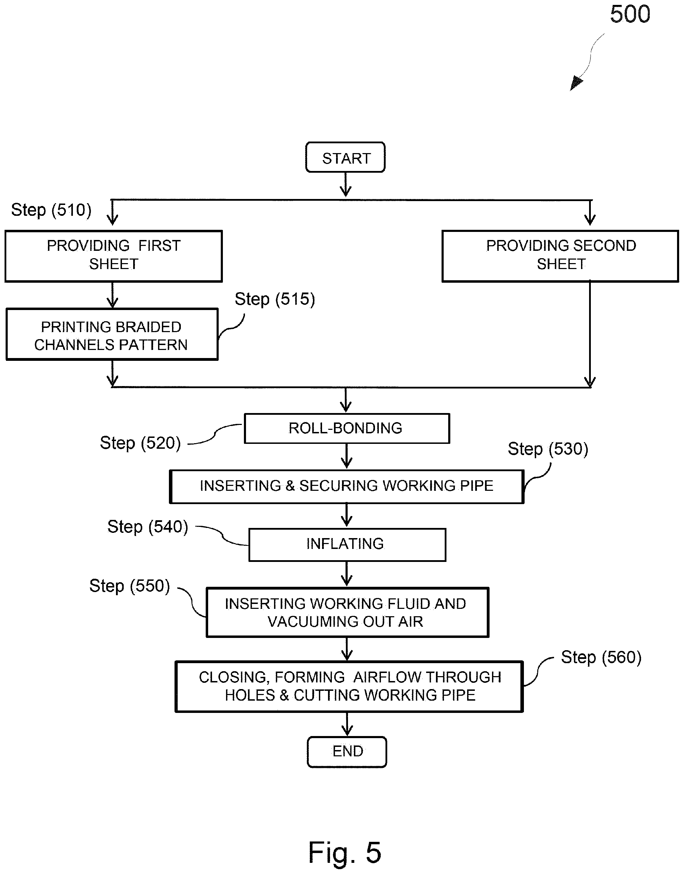

In some embodiments, the first and second inner surfaces 152, 122 are bonded together and integrally formed at areas other than the braided channels 116 formed areas. In some embodiments, each heat exchanger fin 100 is made of aluminum, or an aluminum-alloy or the like, and formed by roll-bonding. Fig. 5 is a flow chart illustrating a manufacturing method of the heat exchanger fin of Fig. 2A, according to an example embodiment. Referring to Fig. 5, and referring to Figs. 1 to 4, the method 800 of manufacturing each heat exchanger fin 100, under vacuum, having a working fluid therein, generally comprises a providing Step 510, a pattern printing Step 515, a roll-bonding Step 520, an inflating Step 540, an inserting and vacuuming Step 550 and a closing, through hole 144 forming, and cutting Step 560. The first step, Step 510, comprises providing at least a first metal sheet and at least a second metal sheet. In some embodiments, the at least a first and second metal sheets are metal coils, unrolled through an unwinder and then aligned by a suitable roller stand. Next, in Step 515, a pattern of braided channels are printed on the at least a first metal sheet. In some embodiments, the sheets are cleaned and then printed by a screen printing process employing a graphite pattern of the braided channels. In some embodiments, each heat exchanger fin 100 further comprises a working channel 916, extending from one end of the braided channels 116 to an outer edge of each heat exchanger fin 100. In some embodiments, the screen printing process employing the graphite pattern also prints the extended working channel 916. Following, in Step 520, the first inner surface of the at least first metal sheet and second inner surface of the at least second metal sheet are integrally bonded in areas other than the braided channels printed areas.

Those of ordinary skill in the relevant art may readily appreciate that the use of graphite serves as a release agent, thus, preventing the at least first and second metal sheets from integrally bonding in at least the areas of the applied patterned braided channels; however, the embodiments are not limited thereto. Any type of method or material may be employed as known and common for those skilled in the relevant art to serve as the release agent. As long as the at least first and second metal sheets are prevented from integrally bonding in the at least areas of the applied braided channels following the roll-bonding step.

In some embodiments, the thickness of the at least a first and second metal sheets 150, 120 is between around 0.250 mm and 3.00 mm, having a reduction of each of the at least a first and second metal sheets 150, 120 between around 40% to 60%; however, the embodiments are not limited thereto. Those of ordinary skill in the relevant art may readily appreciate that thicknesses and reduction of each of the at least a first and second metal sheets 150, 120 can be more or less, depending upon the material, starting thickness, amount of sheets, processes employed, and design requirements for effective and efficient thermal performance.

In some embodiments, the shape of each heat exchanger fin 100 is quadrilateral shaped; however, the embodiments are not limited thereto. Those of skill in the relevant art may readily appreciate that each heat exchanger fin 100 may be of a shape other than quadrilateral shaped, and may be made up of more than one shape according to application and design requirements. As long as airflow, flowing from a second direction perpendicular to a first direction, may be agitated to create turbulent airflow, thus, eliminating dead air between each heat exchanger fin 100 and the braided channels 116 formed by the staggered pitch plurality of airflow through holes 114 increases the creation of the non-equilibrium pressure condition within the braided channels 116, strengthening the self-sustaining turbulent driving forces therein.

Next, in Step 530 a working pipe (not shown) is inserted and secured to the working channel, extending from the one end of the braided channels to an outer edge of each heat exchanger fin. The working pipe allows for communication with the outside atmosphere and braided channels. Following, in Step 540, the braided channels are inflated via a gas having a pressure configured for even inflation throughout each heat exchanger fin 100. In some embodiments, the gas is atmospheric air having a suitable pressure for inflation; however, the embodiments are not limited thereto. In alternative embodiments, the gas may be nitrogen, oxygen, argon, hydrogen, carbon dioxide, or any of the commonly available commercial gasses or compatible mixtures thereof. In some embodiments, the at least a first and second metal sheet 150, 120 is inserted into a mold before inflating for even inflation throughout each heat exchanger fin 100.

In some embodiments, the height or radius of the braided channels 116 from a cross-section is between around 0.125 mm and 1.50 mm; however, the embodiments are not limited thereto. Those of ordinary skill in the relevant art may readily appreciate that the height or radius of the braided channels 116 can be larger or smaller, depending upon the material, starting thickness, amount of sheets, processes employed, and design requirements for effective and efficient thermal performance.

Next, in Step 550 a working substance is inserted into the working pipe and then air is vacuumed out. In Step 560, the working pipe is closed and sealed by flattening and then bonding thereof, and after cooling, the working pipe is cut and the plurality of airflow through holes are formed.

In some embodiments, the diameter of the plurality of airflow through holes 114 is the same and between around 0.500 mm and 6.00 mm; however, the embodiments are not limited thereto. Those of ordinary skill in the relevant art may readily appreciate that the diameter of the plurality of airflow through holes 114 can be larger or smaller, depending upon the material, starting thickness, amount of sheets, and design requirements for effective and efficient thermal performance. As long as airflow, flowing from a second direction perpendicular to a first direction, may be agitated to create turbulent airflow, thus, eliminating dead air between each heat exchanger fin 100 and the braided channels 116 formed by the staggered pitch plurality of airflow through holes 114 increases the creation of the non-equilibrium pressure condition within the braided channels 116, strengthening the self-sustaining turbulent driving forces therein.

In some embodiments, the at least a first metal sheet 150 and at least a second metal sheet 120 are made of aluminum, or an aluminum-alloy or the like, and formed by roll-bonding; however, the embodiments are not limited thereto. Those of ordinary skill in the relevant art may readily appreciate that other manufacturing processes may be employed to form the at least a first metal sheet 150 and at least a second metal sheet 120, such as stamping, depending upon material and manufacturing requirements. Those of ordinary skill in the relevant art may also readily appreciate that the at least a first metal sheet 150 and at least a second metal sheet 120 may be made of copper, or a copper-alloy or the like, or other malleable metal heat conducting material having a relatively high thermal conductivity depending upon application and design requirements. As long as each heat exchanger fin 100 may be formed by roll-bonding or stamping, or the like.

In some embodiments, the base plate 190 is made of aluminum, or an aluminum-alloy or the like and suitable for utilizing a brazing technique for thermal and mechanical, permanent brazing of each fin base 119 of each heat exchanger fin 100 to each mounting groove 192; however, the embodiments are not limited thereto. The base plate 190 may also be made of copper, or a copper-alloy or the like, or other malleable metal heat conducting material having a relatively high thermal conductivity depending upon application and design requirements. As long as each fin base 119 may be thermally and mechanically, permanently mounted to each mounting groove 192.

In some embodiments, the base plate 190 is made of a solid malleable metal heat conducting material having a relatively high thermal conductivity; however, the embodiments are not limited thereto. In alternative embodiments, the base plate 190 is under vacuum, and has a working fluid therein. In yet further alternative embodiments, the base plate 190 has an inlet and an outlet, having working fluid flowing therein and thereabout.

In some embodiments, if a stamping process or the like is used to form each heat exchanger fin 100 any bonding method known by those skilled in the relevant art, such as ultrasonic welding, diffusion welding, laser welding and the like, can be employed to bond and integrally form the first and second inner surfaces 152, 122 together at areas other than the formed areas of the braided channels 116. As long as a vacuum seal can be achieved.

In some embodiments, if a stamping process or the like is employed, depending upon dimensions and application, axial or circumferential wick structure, having triangular, rectangular, trapezoidal, reentrant, etc. cross-sectional geometries, may be formed on inner surfaces of the braided channels 116. The wick structure may be used to facilitate the flow of condensed fluid by capillary force back to the evaporation surface, keeping the evaporation surface wet for large heat fluxes.

Those of ordinary skill in the relevant art may readily appreciate that in alternative embodiments, further heat treatment processes can be employed throughout the manufacturing method of each heat exchanger fin 100, and the embodiments are not limited to those described. Additionally, those skilled in the relevant art may readily appreciate that additional steps can be added to the process in order to incorporate additional features into the finished product. Also, the steps can be altered depending upon different requirements. As examples, and not to be limiting: preparatory steps of alloying, casting, scalping and pre-heating: intermediate steps such as intermediate annealing; and finishing steps such as solution heat treatment or final annealing, stretching, leveling, slitting, edge trimming and aging, and the like may be employed.

In some embodiments, each heat exchanger fin 100 comprises a one sided inflated roll-bonded sheet having braided channels 116; however, the embodiments are not limited thereto. In alternative embodiments, each heat exchanger fin 100 may comprise braided channels on two sides thereof via two one sided inflated roll-bonded sheets. In yet further alternative embodiments, each heat exchanger fin 100 comprising the one sided inflated roll-bonded sheet having braided channels 116, may be employed as a stand-alone heat exchanger, and the embodiments are not limited thereto.

In some embodiments, the working fluid is made of acetone; however, the embodiments are not limited thereto. Other working fluids can be employed, as can be common for those skilled in the relevant art. As a non-limiting example, the working fluid can comprise cyclopentane or n-hexane. As long as the working fluid can be vaporized by a heat source and the vapor can condense back to the working fluid and flow back to the heat source.

A heat exchanger 300 comprising a plurality of heat exchanger fins 1000 and a base plate 190 is provided. Each heat exchanger fin 100 of the plurality of heat exchanger fins 1000 comprises a fin body 115 having a plurality of airflow through holes 114 therethrough, forming braided channels 116 therearound. The braided channels 166 are formed by at least a first metal sheet 150 and at least a second metal sheet 120 of each heat exchange fin 100. The braided channels 116 are under vacuum and have a working fluid therein. The plurality of airflow through holes 144, force airflow to flow from a second direction perpendicular to the airflow flowing across the surfaces between each neighboring heat exchanger fin 100 from a first direction, agitating airflow, creating turbulent airflow, thus, eliminating dead air between each heat exchanger fin 100. The braided channels 116 are formed by a staggered pitch of the plurality of airflow through holes 144, increasing the creation of non-equilibrium pressure conditions, strengthening the self-sustaining turbulent driving forces within the braided channels 116 for heat dissipation.

In the embodiments, a plurality of heat exchanger fins, under vacuum, having a working fluid therein, comprising at least a first metal sheet and at least a second metal sheet are provided. The at least a first and second metal sheet form a fin base, fin body, fin tip, plurality of airflow through holes and braided channels of each heat exchanger fin of a heat exchanger. The plurality of airflow through holes force airflow to flow from a second direction perpendicular to the airflow flowing across the surfaces between each neighboring heat exchanger fin from a first direction, agitating airflow, creating turbulent airflow, thus, eliminating dead air between each heat exchanger fin. By eliminating dead air via the plurality of airflow through holes, the distance between the plurality of heat exchanger fins may be minimized without sacrificing the average amount of heat transferred from each square centimeter of surface area of the plurality of heat exchanger fins, even when only natural convection is available. The plurality of heat exchanger fins, under vacuum, having a working fluid in the braided channels, increases heat dissipation and thermal performance thereof when compared to solid heat exchanger fins. The braided channels formed by the staggered pitch plurality of airflow through holes increases the creation of non-equilibrium pressure conditions, strengthening the self-sustaining turbulent driving forces within the braided channels. Furthermore, insulating blanket layers around heat source walls are prevented from forming and restricting heat transfer. Thus, turbulent airflow is generated via the plurality of airflow through holes, eliminating dead air between each heat exchanger fin, and turbulent liquid flow is generated via the braided channels, eliminating blanket layers restricting heat transfer at a heat source near to at least a part of the braided channels. Also, via the plurality of airflow through holes, mass and weight is decreased when compared to solid heat exchanger fins. When the distance between the plurality of heat exchanger fins is minimized, increasing surface area of a heat source in thermal contact with the heat exchanger, heat dissipation and thermal performance is not sacrificed, even when only natural convection is available.
The presently disclosed inventive concepts are not intended to be limited to the embodiments shown herein, but are to be accorded their full scope consistent with the principles underlying the disclosed concepts herein. Directions and references to an element, such as "up," "down,", "upper," "lower," "horizontal," "vertical," "left," "right," and the like, do not imply absolute relationships, positions, and/or orientations. Terms of an element, such as "first" and "second" are not literal, but, distinguishing terms. As used herein, terms "comprises" or "comprising" encompass the notions of "including" and "having" and specify the presence of elements, operations, and/or groups or combinations thereof and do not imply preclusion of the presence or addition of one or more other elements, operations and/or groups or combinations thereof. Sequence of operations do not imply absoluteness unless specifically so stated. Reference to an element in the singular, such as by use of the article "a" or "an", is not intended to mean "one and only one" unless specifically so stated, but rather "one or more". As used herein, "and/or" means "and" or "or", as well as "and" and "or." As used herein, ranges and subranges mean all ranges including whole and/or fractional values therein and language which defines or modifies ranges and subranges, such as "at least," "greater than," "less than," "no more than," and the like, mean subranges and/or an upper or lower limit. All structural and functional equivalents to the elements of the various embodiments described throughout the disclosure that are known or later come to be known to those of ordinary skill in the relevant art are intended to be encompassed by the features described and claimed herein.

## Claims

1. A heat exchanger fin (100) comprising a fin body (115) having braided channels (116) that are under vacuum and have a working fluid therein, **characterized in that** the fin body (115) has a plurality of airflow through holes (114) there through, whereby the braided channels (116) are formed around the plurality of airflow through holes (114) and by a staggered pitch of the plurality of airflow through holes (114) to increase the creation of a non-equilibrium pressure condition within the braided channels (114), strengthening the self-sustained turbulent driving forces therein.

2. The heat exchanger fin (100) of claim 1, wherein the airflow through holes (114) are generally circular-shaped and/or hexagonal-shaped.

3. The heat exchanger fin (100) of claim 1 or 2, wherein the shape and/or the pitches of the plurality of airflow through holes (114) are at least partially varied.

4. The heat exchanger fin (100) of one of claims 1 to 3, wherein the braided channels (116) are formed by at least one first metal sheet (150) and at least one second metal sheet (120).

5. The heat exchanger fin (100) of claim 4, wherein the at least one first metal sheet (150) and/or the at least one second metal sheet (120) are made of a malleable metal heat conducting material such as aluminum, or an aluminum-alloy or the like, and/or copper, or a copper-alloy or the like.

6. A heat exchanger (300) comprising a base plate (190) and at least one heat exchanger fin (100) of one of claims 1 to 5, whereby the base plate (190) comprises a mounting surface (191) and a contact surface (199), opposite the mounting surface (191), whereby the at least one heat exchanger fin (100) comprises a fin body (115) having a fin base (119), a fin tip (111), a plurality of airflow through holes (114) there through and braided channels (116) formed around the plurality of airflow through holes (114) between the fin base (119) and the fin tip (111), and whereby the fin base (119) of the at least one heat exchanger fin (100) is attached to the mounting surface (191) of the base plate (190) for heat transfer between the base plate (190) and the at least one heat exchanger fin (100).

7. A method of manufacturing a heat exchanger fin (100) according to one of claims 1 to 5, comprising the following steps:
- Providing at least one first metal sheet (150) and at least one second metal sheet (120),
- Forming the inner surface of the at least one first metal sheet (150) and/or the inner surface of the at least one second metal sheet (120) to shape a channel system pattern being a or comprising a braided channels pattern,
- Vacuum tight bonding, especially welding, the inner surface of the at least one first metal sheet (150) and the inner surface of the at least one second metal sheet (120) in at least areas around the channel system, especially the braided channels (116),
- Inserting a working fluid into the channel system, especially the braided channels (116), and vacuuming out air,
- Closing the channel system, especially the braided channels (116),
- Forming airflow through holes (114) that are at least partially surrounded by the braided channels (116) so that the braided channels (116) are formed by a staggered pitch of the plurality of airflow through holes (114) to increase the creation of a non-equilibrium pressure condition within the braided channels (114), strengthening the self-sustained turbulent driving forces therein.

8. A method of manufacturing a heat exchanger fin (100) according to one of claims 1 to 5, comprising the following steps:
- Providing at least one first metal sheet (150) and at least one second metal sheet (120),
- Printing a channel system pattern being or comprising a braided channels pattern on the at least one first metal sheet (150),
- Integrally bonding, especially roll-bonding, the inner surface of the at least one first metal sheet (150) and inner surface of the at least one second metal sheet (120) in at least areas around the printed channel system pattern, especially the printed braided channels pattern,
- Inflating the areas of the channel system pattern, especially the braided channels pattern via a gas to form a channel system, especially the braided channels (116),
- Inserting a working fluid into the channel system, especially the braided channels (116) and vacuuming out air,
- Closing the channel system, especially the braided channels (116), and
- Forming airflow through holes (114) that are at least partially surrounded by the braided channels (116) so that the braided channels (116) are formed by a staggered pitch of the plurality of airflow through holes (114) to increase the creation of a non-equilibrium pressure condition within the braided channels (114), strengthening the self-sustained turbulent driving forces therein.

9. The method of claim 7 or 8, wherein the airflow through holes (114) are formed in the bonded areas of the at least one first metal sheet (150) and the at least one second metal sheet (120).

10. The method of one of claims 7 to 9, wherein the channel system at least initially comprises an open working channel (916) in a working section and the method further comprises the following steps:
- Inserting and securing a working pipe to the working channel (916),
- After inserting the working fluid closing an sealing the working pipe and/or the working channel (916) by flattening and then bonding thereof, and
- At least partially cutting off the working section comprising the working channel (916) and the working pipe.

11. The method of one of claims 7 to 10, comprising the following step:
- At least in sections forming axial and/or circumferential wick structures on inner surfaces of the braided channels (116) and/or braided channels pattern.

## Patentansprüche

1. Eine Wärmetauscherrippe (100), umfassend einen Rippenkörper (115) mit ummantelten Kanälen (116), die unter Vakuum stehen und in denen sich ein Arbeitsfluid befindet, **dadurch gekennzeichnet, dass** der Rippenkörper (115) von einer Vielzahl von Luftstrom-Durchgangslöchern (114) durchsetzt ist, wobei die ummantelten Kanäle (116) um die Vielzahl von Luftstrom-Durchgangslöchern (114) herum und durch eine versetzte Anordnung der Vielzahl von Luftstrom-Durchgangslöchern (114) ausgebildet sind, um die Erzeugung eines ungleichgewichtigen Druckzustands innerhalb der ummantelten Kanäle (114) zu erhöhen, wodurch die selbsterhaltenden turbulenten Antriebskräfte darin verstärkt werden.

2. Die Wärmetauscherrippe (100) nach Anspruch 1, wobei die Luftstrom-Durchgangslöcher (114) im Allgemeinen kreisförmig und/oder sechseckig geformt sind.

3. Die Wärmetauscherrippe (100) nach Anspruch 1 oder 2, wobei die Form und/oder die Abstände der Vielzahl von Luftstrom-Durchgangslöchern (114) zumindest teilweise variieren.

4. Die Wärmetauscherrippe (100) nach einem der Ansprüche 1 bis 3, wobei die ummantelten Kanäle (116) durch mindestens ein erstes Metallblech (150) und mindestens ein zweites Metallblech (120) ausgebildet sind.

5. Die Wärmetauscherrippe (100) nach Anspruch 4, wobei das mindestens eine erste Metallblech (150) und/oder das mindestens eine zweite Metallblech (120) aus einem verformbaren, metallischen und wärmeleitenden Material wie Aluminium, einer Aluminiumlegierung oder dergleichen und/oder Kupfer, einer Kupferlegierung oder dergleichen hergestellt sind.

6. Ein Wärmetauscher (300), umfassend eine Grundplatte (190) und mindestens eine Wärmetauscherrippe (100) nach einem der Ansprüche 1 bis 5, wobei die Grundplatte (190) eine Montagefläche (191) und eine der Montagefläche (191) gegenüberliegende Kontaktfläche (199) aufweist, wobei die mindestens eine Wärmetauscherrippe (100) einen Rippenkörper (115) mit einer Rippenbasis (119), eine Rippenspitze (111), einer Vielzahl von Luftstrom-Durchgangslöchern (114) und ummantelte Kanäle (116), die um die Vielzahl von Luftstrom-Durchgangslöchern (114) zwischen der Rippenbasis (119) und der Rippenspitze (111) herum ausgebildet sind, aufweist, und wobei die Rippenbasis (119) der mindestens einen Wärmetauscherrippe (100) an der Montagefläche (191) der Grundplatte (190) angebracht ist, um Wärme zwischen der Grundplatte (190) und der mindestens einen Wärmetauscherrippe (100) zu übertragen.

7. Ein Verfahren zur Herstellung einer Wärmetauscherrippe (100) nach einem der Ansprüche 1 bis 5, umfassend die folgenden Schritte:
- Bereitstellen mindestens eines ersten Metallblechs (150) und mindestens eines zweiten Metallblechs (120),
- Umformen der Innenfläche des mindestens einen ersten Metallblechs (150) und/oder der Innenfläche des mindestens einen zweiten Metallblechs (120) um ein Kanalsystemmuster auszubilden, das ein Muster ummantelter Kanäle ist oder umfasst,
- vakuumdichtes Verbinden, insbesondere Verschweißen, der Innenfläche des mindestens einen ersten Metallblechs (150) und der Innenfläche des mindestens einen zweiten Metallblechs (120) zumindest in Bereichen um das Kanalsystem herum, insbesondere um die ummantelten Kanäle (116) herum,
- Einbringen eines Arbeitsfluids in das Kanalsystem, insbesondere in die ummantelten Kanäle (116), und Absaugen von Luft,
- Verschließen des Kanalsystems, insbesondere der ummantelten Kanäle (116),
- Ausformen von Luftstrom-Durchgangslöchern (114), die zumindest teilweise von den ummantelten Kanälen (116) umgeben sind, so dass die ummantelten Kanäle (116) durch eine versetzte Anordnung der Vielzahl von Luftstrom-Durchgangslöchern (114) ausgebildet sind, um die Erzeugung eines ungleichgewichtigen Druckzustands innerhalb der ummantelten Kanäle (114) zu erhöhen, wodurch die selbsterhaltenden turbulenten Antriebskräfte darin verstärkt werden.

8. Ein Verfahren zur Herstellung einer Wärmetauscherrippe (100) nach einem der Ansprüche 1 bis 5, umfassend die folgenden Schritte:
- Bereitstellen mindestens eines ersten Metallblechs (150) und mindestens eines zweiten Metallblechs (120),
- Aufdrucken eines Kanalsystemmusters, das ein Muster ummantelter Kanäle ist oder umfasst, auf das mindestens eine erste Metallblech (150),
- Integrales Verbinden, insbesondere Walzverbinden, der Innenfläche des mindestens einen ersten Metallblechs (150) und der Innenfläche des mindestens einen zweiten Metallblechs (120) zumindest in den Bereichen um das gedruckte Kanalsystemmuster herum, insbesondere um das gedruckte Muster der ummantelten Kanäle herum,
- Aufblasen der Bereiche des Kanalsystemmusters, insbesondere des Musters der ummantelten Kanäle, durch ein Gas, um ein Kanalsystem, insbesondere um die ummantelten Kanäle (116), auszubilden,
- Einbringen eines Arbeitsfluids in das Kanalsystem, insbesondere in die ummantelten Kanäle (116), und Absaugen von Luft,
- Verschließen des Kanalsystems, insbesondere der ummantelten Kanäle (116), und
- Ausformen von Luftstrom-Durchgangslöchern (114), die zumindest teilweise von den ummantelten Kanälen (116) umgeben sind, so dass die ummantelten Kanäle (116) durch eine versetzte Teilung der Vielzahl von Luftstrom-Durchgangslöchern (114) ausgebildet sind, um die Erzeugung eines ungleichgewichtigen Druckzustands innerhalb der ummantelten Kanäle (114) zu erhöhen, wodurch die selbsterhaltenden turbulenten Antriebskräfte darin verstärkt werden.

9. Das Verfahren nach Anspruch 7 oder 8, wobei die Luftstrom-Durchgangslöcher (114) in den verbundenen Bereichen des mindestens einen ersten Metallblechs (150) und des mindestens einen zweiten Metallblechs (120) ausgebildet sind.

10. Das Verfahren nach einem der Ansprüche 7 bis 9, wobei das Kanalsystem zumindest anfänglich in einem Arbeitsabschnitt einen offenen Arbeitskanal (916) aufweist und wobei das Verfahren ferner die folgenden Schritte umfasst:
- Einführen und Befestigen eines Arbeitsrohres in den Arbeitskanal (916),
- Verschließen und Abdichten des Arbeitsrohrs und/oder des Arbeitskanals (916) nach dem Einbringen des Arbeitsfluids durch Abflachen und anschließendes Verbinden, und
- zumindest teilweises Abschneiden des den Arbeitskanal (916) und das Arbeitsrohr umfassenden Arbeitsabschnitts.

11. Das Verfahren nach einem der Ansprüche 7 bis 10, umfassend den folgenden Schritt:
- zumindest abschnittsweises Ausbilden von axialen und/oder umlaufenden Mantelstrukturen an den Innenflächen der ummantelten Kanäle (116) und/oder des Musters ummantelter Kanäle.

## Revendications

1. Ailette d'échangeur de chaleur (100) comprenant un corps d'ailette (115) ayant des canaux tressés (116) qui sont sous vide et contiennent un fluide de travail, **caractérisée en ce que** le corps d'ailette (115) est traversé par une pluralité de trous traversants de flux d'air (114), moyennant quoi les canaux tressés (116) sont formés autour de la pluralité de trous traversants de flux d'air (114) et par un agencement échelonné de la pluralité de trous traversants de flux d'air (114) pour augmenter la création d'une condition de pression non équilibrée dans les canaux tressés (114), y renforçant les forces d'entraînement turbulent auto-entretenues.

2. Ailette d'échangeur de chaleur (100) selon la revendication 1, dans laquelle les trous traversants de flux d'air (114) présentent généralement une forme circulaire et/ou hexagonale.

3. Ailette d'échangeur de chaleur (100) selon la revendication 1 ou 2, dans laquelle la forme et/ou les agencements de la pluralité de trous traversants de flux d'air (114) sont au moins partiellement variés.

4. Ailette d'échangeur de chaleur (100) selon l'une des revendications 1 à 3, dans laquelle les canaux tressés (116) sont constitués par au moins une première tôle (150) et au moins une deuxième tôle (120).

5. Ailette d'échangeur de chaleur (100) selon la revendication 4, dans laquelle ladite au moins une première tôle (150) et/ou ladite au moins une deuxième tôle (120) sont constituées d'un matériau métallique thermoconducteur malléable tel que l'aluminium ou un alliage d'aluminium ou similaire, et/ou le cuivre ou un alliage de cuivre ou similaire.

6. Échangeur de chaleur (300) comprenant une plaque de base (190) et au moins une ailette d'échangeur de chaleur (100) selon l'une des revendications 1 à 5, moyennant quoi la plaque de base (190) comprend une surface de montage (191) et une surface de contact (199) opposée à la surface de montage (191), moyennant quoi ladite au moins une ailette d'échangeur de chaleur (100) comprend un corps d'ailette (115) comportant une base d'ailette (119), une pointe d'ailette (111), une pluralité de trous traversants de flux d'air (114) qui la traversent et des canaux tressés (116) formés autour de la pluralité de trous traversants de flux d'air (114) entre la base d'ailette (119) et la pointe d'ailette (111), et moyennant quoi la base d'ailette (119) de ladite au moins une ailette d'échangeur de chaleur (100) est attachée à la surface de montage (191) de la plaque de base (190) pour un transfert de chaleur entre la plaque de base (190) et ladite au moins une ailette d'échangeur de chaleur (100).

7. Procédé de fabrication d'une ailette d'échangeur de chaleur (100) selon l'une des revendications 1 à 5, comprenant les étapes suivantes :
- fourniture d'au moins une première tôle (150) et d'au moins une deuxième tôle (120),
- formation de la surface interne de ladite au moins une première tôle (150) et/ou de la surface interne de ladite au moins une deuxième tôle (120) pour former un motif de système de canaux consistant en un motif de canaux tressés ou comprenant un tel motif,
- assemblage étanche au vide, en particulier par soudage, de la surface interne de ladite au moins une première tôle (150) et de la surface interne de ladite au moins une deuxième tôle (120) au moins dans les zones entourant le système de canaux, en particulier les canaux tressés (116),
- introduction d'un fluide de travail dans le système de canaux, en particulier les canaux tressés (116), et aspiration de l'air pour former le vide,
- fermeture du système de canaux, en particulier des canaux tressés (116),
- formation de trous traversants de flux d'air (114) qui sont au moins partiellement entourés par les canaux tressés (116) de manière à ce que les canaux tressés (116) soient formés par un agencement échelonné de la pluralité de trous traversants de flux d'air (114) pour augmenter la création d'une condition de pression non équilibrée dans les canaux tressés (114), renforçant les forces d'entraînement turbulent auto-entretenues qui s'y exercent.

8. Procédé de fabrication d'une ailette d'échangeur de chaleur (100) selon l'une des revendications 1 à 5, comprenant les étapes suivantes :
- fourniture d'au moins une première tôle (150) et d'au moins une deuxième tôle (120),
- impression d'un motif de système de canaux consistant en un motif de canaux tressés, ou comprenant celui-ci, sur ladite au moins une première tôle (150),
- assemblage intégral, en particulier par laminage, de la surface interne de ladite au moins une première tôle (150) et de la surface interne de ladite au moins une deuxième tôle (120) au moins dans les zones autour du motif de système de canaux imprimé, en particulier le motif de canaux tressés imprimé,
- gonflage des zones du motif de système de canaux, en particulier du motif de canaux tressés à l'aide d'un gaz pour former un système de canaux, en particulier les canaux tressés (116),
- introduction d'un fluide de travail dans le système de canaux, en particulier les canaux tressés (116), et aspiration de l'air pour former le vide,
- fermeture du système de canaux, en particulier des canaux tressés (116), et
- formation de trous traversants de flux d'air (114) qui sont au moins partiellement entourés par les canaux tressés (116) de manière à ce que les canaux tressés (116) soient formés par un agencement échelonné de la pluralité de trous traversants de flux d'air (114) pour augmenter la création d'une condition de pression non équilibrée dans les canaux tressés (114), renforçant les forces d'entraînement turbulent auto-entretenues qui s'y exercent.

9. Procédé selon la revendication 7 ou 8, dans lequel les trous traversants de flux d'air (114) sont formés dans les zones assemblées de ladite au moins une première tôle (150) et de ladite au moins une deuxième tôle (120).

10. Procédé selon l'une des revendications 7 à 9, dans lequel le système de canaux comprend, au moins initialement, un canal fonctionnel ouvert (916) dans une section fonctionnelle et le procédé comprend en outre les étapes suivantes :
- insertion et fixation d'un tuyau fonctionnel dans le canal fonctionnel (916),
- après l'insertion du fluide de travail, fermeture et scellement du tuyau fonctionnel et/ou du canal fonctionnel (916) en l'aplatissant et ensuite en l'assemblant, et
- découpe, au moins partielle, de la section fonctionnelle comprenant le canal fonctionnel (916) et le tuyau fonctionnel.

11. Procédé selon l'une des revendications 7 à 10, comprenant l'étape suivante :
- au moins dans des sections formant des structures de mèche axiales et/ou circonférentielles sur des surfaces internes des canaux tressés (116) et/ou sur un motif de canaux tressés.
